# EUROPÄISCHE PATENTSCHRIFT

(11) **EP 2 033 509 B1**
(45) Veröffentlichungstag und Bekanntmachung des Hinweises auf die Patenterteilung: **24.11.2010**
(21) Anmeldenummer: 08157646.4
(22) Anmeldetag: 05.06.2008
(51) Int. Cl.: A01F 12/16

(54) **Mähdrescher mit einer Vorrichtung zum Abscheiden von Fremdkörpern**
Combine harvester with a device for removing foreign bodies
Moissonneuse-batteuse dotée d'un dispositif destiné à séparer des corps étrangers

(30) Priorität: 04.09.2007 DE 102007041715
(43) Veröffentlichungstag der Anmeldung: 11.03.2009
(73) Patentinhaber: CLAAS Selbstfahrende Erntemaschinen GmbH, 33428 Harsewinkel (DE)
(72) Erfinder: Korte, Hubert, 48346, Ostbevern (DE); Fögeling, Walter, 33442, Herzebrock-Clarholz (DE); Speckamp, Dirk, 59073, Hamm (DE); Aerdker, Bernhard, 48231, Warendorf (DE)

(56) Entgegenhaltungen:
- EP-A- 0 073 269
- EP-A- 1 044 597
- US-A- 4 657 029

## Beschreibung

Die Erfindung betrifft einen Mähdrescher nach dem Oberbegriff des Anspruchs 1.

Aus der DE 31 35 992 A1 ist ein derartiger Mähdrescher mit einer Vorrichtung zum Abscheiden von im Erntegut mitgeführten Gegenständen bekannt. Die Vorrichtung besteht aus einer unterhalb des Schrägförderers angeordneten Fremdkörperaufnahmemulde, die sich ungefähr auf halber Höhe zwischen der unteren und der oberen Zugmittelführung befindet. Als Zugmittel werden mehrere parallel laufende Zugketten verwendet, die mittels quer zur Förderrichtung aufgeschraubten Förderleisten zumindest teilsweise miteinander verbunden sind. Das von einer Erntegutaufnahmevorrichtung, beispielsweise einem Getreideschneidwerk aufgenommene Erntegut wird durch die Förderleisten im unteren Bogenbereich des Schrägförderers zu den in dem Mähdrescher befindlichen Emtegutbearbeitungselementen, wie beispielsweise einem Dreschwerk gefördert. Oberhalb der Fremdkörperaufnahmemulde befindet sich zwischen dem unteren und dem oberen Trum des Zugmittels ein Tastorgan, welches in der Erntegutmatte befindliche Fremdkörper, insbesondere Steine, in die Fremdkörpefaufnahmemulde drücken soll. Hierzu weist das Tastorgan im Wesentlichen über die gesamte Breite des Schrägförderers eine in Richtung des Schragfordererbodens zulaufende Leitvorrichtung auf, die mittels der Kraft einer Feder in Richtung der Erntegutmatte gedrückt wird. Durch eine entsprechend ausgebildete Fläche der Leitvorrichtung wird das Zugmittel zusätzlich geführt. Wenn sich nun Steine auf oder in der Erntegutmatte befinden, sollen diese an der Leitvorrichtung durch deren Schrägstellung in Richtung der Fremdkörperaufnahmemulde gedrückt und somit aus der Erntegutmatte ausgeschieden werden. Nachteilig an einem derart bekannten Mähdrescher ist es, dass die Vorrichtung nur auf oberhalb des Zugmittels und somit auch oberhalb der Erntegutmatte befindliche Fremdkörper einwirken kann. Insbesondere kleinere Fremdkörper, die sich in der Erntegutmatte befinden und den Förderspalt zwischen dem Schrägfördererboden und dem Zugmittel nicht überragen sind mittels einer derartigen Vorrichtung nicht ausscheidbar, so dass diese In die Erntegutbearbeitungselemente des Mähdreschers gefördert werden und dort Schäden an dem Mähdrescher bewirken können. Weiterhin ist es nachteilig, dass die Vorrichtung ungefähr mittig des Schrägförderers angeordnet ist, der aufgrund des Aufbaus des Schrägförderers schlecht zugänglich ist, so dass sowohl die Montage als auch eine mögliche Reparatur der Vorrichtung mit einem erheblichen zeitlichen Aufwand verbunden ist.

Aus der DE 26 00 833 A1 ist ein Mähdrescher mit einer Vorrichtung zum Abscheiden von Fremdkörpern bekannt, wie sie derzeit in ähnlicher Form bei einer Reihe in der Praxis verwendeten Mähdreschern benutzt wird. Zwischen dem Ende des im Schrägförderer befindliche Zugmittels und dem Eingriffsbereich einer Dreschtrommel ist eine sogenannte Steinfangmulde angeordnet, in die in der Erntegutmatte befindliche Fremdkörper, in der Regel Steine aufgrund ihrer Schwerkraft hineinfallen sollen. Für den Fall, dass die Steinfangmulde dann mit Fremdkörpern gefüllt ist, ist eine entsprechende Mechanik vorgesehen, die ein Ausleeren der Steinfangmulde ermöglicht. Nachteilig an der bekannten Vorrichtung ist es, dass aufgrund der Position der Steinfangmulde die Größe und damit der mögliche Umschlingungswinkel der die Dreschtrommel umgebenden Dreschkörbe begrenzt ist, was das Leistungsvermögen des Mähdreschers einschränkt. Weiterhin ist es nachteilig, dass in der bzw. auf der Erntegutmatte befindliche Fremdkörpern nicht immer aufgrund ihrer Schwerkraft die Erntegutmatte durchdringen können, so dass diese mit in den Erntegutbearbeitungsprozess des Mähdreschers gefördert werden und dort entsprechende Schäden verursachen können.

Aus der EP 0 073 269 A1 ist Mähdrescher mit einer Druckrolle zur Abscheidung von Fremdkörpern, die in einem Einzugskanal zwischen zwei eine Förderkette antreibenden Förderwalzen angeordnet ist. Die Druckrolle beaufschlagt über einen in dem Einzugskanal geförderten Fremdkörper eine eine Durchlassöffnung verschließende Klappe zur Ausscheidung des Fremdkörpers aus dem Erntegutstrom.

Diese Vorrichtung ist sehr aufwändig, da die Druckrolle zusätzlich mit einer Mechanik zusammenwirkt, die der Lagerung und Belastung der Druckrolle dient.

Aus der US 4,657,029 ist es bekannt, unterhalb einer Wendetrommel eine Steinfangmulde anzuordnen, die der Aufnahme von durch die Wendetrommel ausgeschiedenen Steinen dient. Die Wendetrommel ist am Ausgang des Einzugskanals hinter dem oberen Kettenrad angeordnet, das dem Antrieb der Kette dient. Zur Abscheidung von Steinen wird das Erntegut an die Wendetrommel übergeben, welche die Steine aus dem Erntegutstrom aussondern soll.

Aufgabe der vorliegenden Erfindung ist es, die beschriebenen Nachteile des Standes der Technik zu vermeiden und insbesondere einen Mähdrescher gemäß des Oberbegriffs des Anspruchs 1 derart weiterzubilden, dass im Erntegut befindliche Fremdkörper sicher und effektiv abgeschieden werden.

Diese Aufgabe wird erfindungsgemäß durch die kennzeichnenden Merkmale des Anspruchs 1 gelöst.

Dadurch, dass bei einem Mähdrescher mit einer Vorrichtung zum Abscheiden von Fremdkörpern, wobei der Mähdrescher einen Schrägförderer mit zumindest einem in einem Kanal angeordneten Zugmittel, welches über zumindest eine untere und eine obere Zugmittelführung umgelenkt wird, und zumindest eine Fremdkörperaufnahmemulde aufweist, die obere Zugmittelführung eine Trommel aufweist, an deren Außenumfang Fremdkörperabscheideelemente angeordnet sind, die das Zugmittel durchgreifen, und dass die Fremdkörperaufnahmemulde im Eingriffsbereich der Fremdkörperabscheideelemente angeordnet ist, werden im oder auf der Erntegutmatte befindliche Fremdkörper aktiv durch die Fremdkörperabscheideelemente erfasst und in die Fremdkörperaufnahmemulde gefördert. Somit ist es auch bei der dichten Erntegutmatte gewährleistet, dass Fremdkörper nicht in die Erntegutbearbeitungselemente des Mähdreschers gelangen, sondern vorher abgeschieden werden.

Bei einer vorteilhaften Weiterbildung der Erfindung ist die Fremdkörperaufnahmemulde in Gutflussrichtung gesehen vor der oberen Zugmittelführung angeordnet, was insbesondere den Vorteil bietet, dass der zwischen dem Zugmittel und dem Dreschorgan befindliche Bauraum für einen größeren Dreschkorb zur Verfügung steht, wodurch der Umschlingungswinkel der Dreschkörbe um die Dreschorgane vergrößert und letztlich die Leistungsfähigkeit des Mähdreschers erhöht wird. Ein weiterer Vorteil einer derartigen Anordnung der Fremdkörperaufnahmemulde ergibt sich dadurch, dass an der Position unterhalb des Schrägförderers genügend Bauraum zur Verfügung steht, so dass die Fremdkörperaufnahmemulde großvolumig ausgebildet werden kann, was die Intervalle, in denen die Mulde geleert werden muss, verlängert.

Eine Weiterbildung der Erfindung zeichnet sich dadurch aus, dass die Fremdkörperabscheideelemente drehbar um die Rotationsachse der oberen Zugmittelführung gelagert und gemeinsam mit dem Zugmittel antreibbar sind. Hierdurch ergibt sich ein kompakter und einfacher Aufbau der Vorrichtung und sie benötigt keinen gesonderten Antriebsmechanismus.

Um zu verhindern, dass die Fremdkörperabscheidelemente zu stark in die Erntegutmatte eingreifen und Schlechtestenfalls Erntegut um die obere Zugmittelführung herum zurück in den Schrägförderer fördern, sind bei einer vorteilhaften Weiterbildung der erfindungsgemäßen Vorrichtung die Fremdkörperabscheideelemente exzentrisch und drehbar zur Rotationsachse der oberen Zugmittelachse gelagert, so dass sie nur im Bereich der Fremdkörperaufnahmemulde mit der Erntegutmatte in Kontakt kommen und ansonsten hinter dem Eingriffsbereich des Zugmittels zurückliegen.

Vorteilhaft sind die Fremdkörperabscheideelemente als das Zugmittel durchgreifende Leisten ausgebildet, so dass ein großflächiger Eingriff in die Erntegutmatte gewährleistet ist, wodurch die Fremdkörper effektiv abgeschieden werden.

Alternativ sind die Fremdkörperabscheideelemente als das Zugmittel durchgreifende Finger ausgebildet, wodurch ein einfacher und gewichtsoptimierter Aufbau der Vorrichtung möglich ist.

Es ist ebenso möglich, als Fremdkörperabscheideelemente eine Kombination aus Leisten und Fingern einzusetzen.

Bei einer vorteilhaften Weiterbildung der Erfindung ist die kreisförmige äußere Bewegungsbahn der Fremdkörperabscheideelemente im Durchmesser größer als der äußere Durchmesser der oberen Zugmittelführung. Durch einen derartigen Aufbau bewirken die Fremdkörperabscheidelemente nicht nur ein effektives Abscheiden der in der Erntegutmatte befindlichen Fremdkörper, sondern sie wirken für die Erntegutmatte gleichzeitig als Beschleunigungsorgan, durch dass das Erntegut beschleunigt und dem Dreschorgan dünnschichtig und gleichmäßig zugeführt wird. Die Vorteile und Wirkungsweise eines mit der oberen Zugmittelführung in Wirkverbindung stehenden Beschleunigungsorgans sind in der seitens der Anmelderin eingereichten Europäischen Patentanmeldung mit der Veröffentlichungsnummer EP 1 733 607 A1 beschrieben, deren Merkmale durch die Bezugnahme in diese Anmeldung mit aufgenommen werden.

Vorteilhaft ist zumindest eine Wandung der Fremdkörperaufnahmemulde schwenkbar an dem Kanal festsetzbar, so dass ein einfaches und schnelles Entleeren der Fremdkörperaufnahmemulde gewährleistet ist.

Anhand der beigefügten Zeichnungen wird die Erfindung nachfolgend näher erläutert.
Es zeigen:
- Fig. 1:: eine schematische Seitenansicht eines selbstfahrenden Mähdreschers und
- Fig. 2:: eine schematische vergrößerte Seitenansicht eines erfindungsgemäßen Schrägförderers.

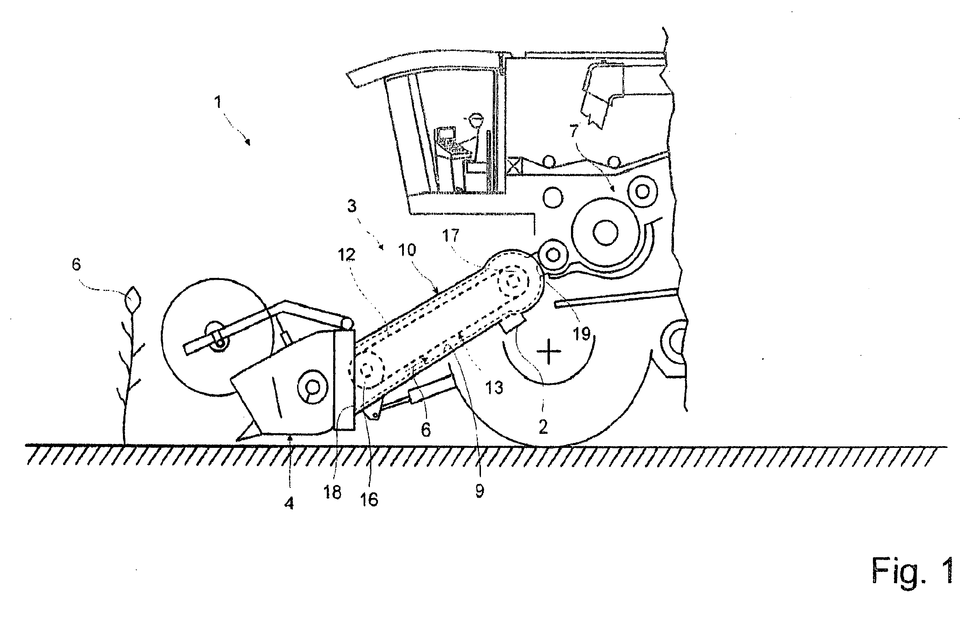

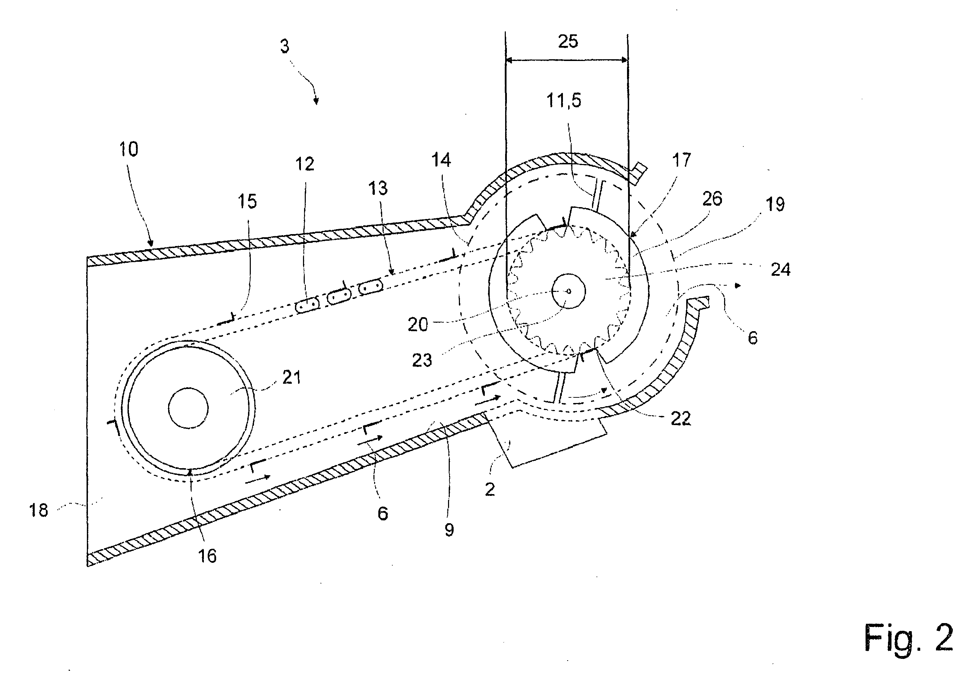

In Fig. 1 ist eine als selbstfahrender Mähdrescher 1 ausgeführte landwirtschaftliche Erntemaschine in einer schematischen Seitenansicht dargestellt, an deren Schrägförderer 3 ein als Schneidwerk 4 ausgeführtes Vorsatzgerät angeordnet ist. Selbstverständlich kann das Vorsatzgerät auch als Maispflücker oder dergleichen ausgebildet sein. Das von dem Schneidwerk 4 abgeschnittene Erntegut 6 wird an einer Annahmeöffnung 18 in den Schrägförderer 3 gefördert. Der Schrägförderer 3 fördert nun das Erntegut 6 weiter zu seiner Abgabeöffnung 19, wo es an ein in dem Mähdreschergehäuse befindliches Dreschorgan 7 weitergeleitet wird. Zur Förderung des Erntegutes 6 sind in dem Kanal 10 des Schrägförderers 3 eine Mehrzahl von als Ketten 12 ausgebildete Zugmittel 13 angeordnet, die um eine untere Zugmittelführung 16 und eine obere Zugmittelführung 17 herum kontinuierlich angetrieben werden. Das Erntegut 6 wird unterschlächtig zwischen dem Zugmittel 13 und dem Boden 9 des Kanals 10 gefördert. Im Bereich der oberen Zugmittelführung 17 ist eine Fremdkörperaufnahmemulde 2 angeordnet, auf die Bezug auf Figur 2 noch näher eingegangen wird.

Fig. 2 zeigt eine vergrößerte Seitenansicht des erfindungsgemäßen Schrägförderers 3. Er weist zwei als endlose Ketten 12 ausgeführte Zugmittel 13 auf, die über Mitnehmerleisten 15 miteinander verbunden sind. Die Ketten 12 werden über eine untere Zugmittelführung 16 und eine obere Zugmittelführung 17 umgelenkt, wobei die untere Zugmittelführung 16 im Bereich der dem Schneidwerk 4 zugewandten Annahmeöffnung 18 des Kanals 10 und die obere Zugmittelführung 17 im Bereich der des Dreschorgans 7 zugewandten Abgabeöffnung 19 des Kanals 10 drehbar gelagert sind. Die Mitnehmerleisten 15 schieben das an der Annahmeöffnung 18 erfasste Erntegut 6 über den Boden 9 des Kanals 10 bis zur Abgabeöffnung 19.
Der Schrägförderer 3 ist um die Rotationsachse 20 der oberen Zugmittelführung 17 höhenverschwenkbar.
Die Zugmittel 13 werden mittels eines auf der oberen Zugmittelführung 17 befindlichen Kettenrades 24 angetrieben, so dass die obere Zugmittelführung 17 gleichzeitig als Antriebswelle 23 ausgebildet ist. Die untere Zugmittelführung 16 ist als Trommel 21 ausgebildet, so dass sie lediglich die Zugmittel 13 führt und umlenkt.
Die obere Zugmittelführung 17 weist ebenfalls eine Trommel 26 auf, deren Durchmesser größer als der den Umlenkradius der Zugmittel 13 bestimmende Durchmesser 25 des Kettenrades 24 ist. Die Trommel 26 weist Nuten 22 auf, deren Anordnung der Teilung der Mitnehmerleisten 15 auf den Zugmitteln 13 entspricht. Zusätzlich sind am Außenumfang der Trommel 26 als Finger 5 ausgebildete Fremdkörperabscheideelemente 11 angeordnet, die während des Umlaufs der Zugmittel 13 dieses durchgreifen.
Im Bereich des Eingriffs der Fremdkörperabscheideelemente 11 ist der Boden 9 des Kanals 10 geöffnet und eine Fremdkörperaufnahmemulde 2 angeordnet. Die Fremdkörperaufnahmemulde 2 ist zum Zweck ihrer Entleerung mit einer hier nicht dargestellten Schwenkmechanik an dem Kanal befestigt.
Wenn sich nun Fremdkörper, beispielsweise in Form von Steinen in der Erntegutmatte befinden, werden diese im Bereich der oberen Zugmittelführung 17 durch die sich entgegen des Uhrzeigersinns um die Rotationsachse 20 drehenden Fremdkörperabscheideelemente 11 erfasst und in die Fremdkörperaufnahmemulde 2 gedrückt. Dies betrifft sowohl große Fremdkörper als auch kleine Fremdkörper, da diese aufgrund des großen Durchmesser der Bewegungsbahn 14 der Fremdkörperabscheideelemente 2 eine entsprechende Beschleunigung erfahren und auch sehr dichte Erntegutmatten durchdringen.
Zusätzlich bietet der große Durchmesser der Bewegungsbahn 14 der Fremdkörperabscheideelemente 11 den Vorteil, dass das Erntegut 6 beschleunigt wird und somit als dünnschichtige und gleichmäßige Erntegutmatte dem Dreschorgan zugeführt wird.

### Bezugszeichenliste:

- 1: Mähdrescher
- 2: Fremdkörperaufnahmemulde
- 3: Schrägförderer
- 4: Schneidwerk
- 5: Finger
- 6: Erntegut
- 7: Dreschorgan

- 9: Boden
- 10: Kanal
- 11: Fremdkörperabscheideelement
- 12: Ketten
- 13: Zugmittel
- 14: Bewegungsbahn
- 15: Mitnehmerleiste
- 16: untere Zugmittelführung
- 17: obere Zugmittelführung
- 18: Annahmeöffnung
- 19: Abgabeöffnung
- 20: Rotationsachse
- 21: Trommel
- 22: Nut
- 23: Antriebswelle
- 24: Kettenrad
- 25: Durchmesser
- 26: Trommel

## Patentansprüche

1. Mähdrescher (1) mit einer Vorrichtung zum Abscheiden von Fremdkörpern, wobei der Mähdrescher 1 einen Schrägförderer (3) mit zumindest einem in einem Kanal (10) angeordneten Zugmittel (13), welches über zumindest eine untere und eine obere Zugmittelführung (16,17) umgelenkt wird, und zumindest eine Fremdkörperaufnahmemulde 2 aufweist,
**dadurch gekennzeichnet,**
**dass** die obere Zugmittelführung (17) eine Trommel (26) aufweist, an deren Außenumfang Fremdkörperabscheideelemente (11) angeordnet sind, die das Zugmittel (13) durchgreifen, und dass die Fremdkörperaufnahmemulde (2) im Eingriffsbereich der Fremdkörperabscheideelemente (11) angeordnet ist.

2. Mähdrescher 1 nach Anspruch 1, **dadurch gekennzeichnet, dass** die Fremdkörperaufnahmemulde 2 in Gutflussrichtung gesehen vor der oberen Zugmittelführung 17 angeordnet ist.

3. Mähdrescher 1 nach einem der vorstehenden Ansprüche, **dadurch gekennzeichnet, dass** die Fremdkörperabscheideelemente 11 drehbar um die Rotationsachse 20 der oberen Zugmittelführung 17 gelagert und gemeinsam mit dem Zugmittel 13 antreibbar sind.

4. Mähdrescher 1 nach einem der vorstehenden Ansprüche, **dadurch gekennzeichnet, dass** die Fremdkörperabscheideelemente 11 exzentrisch und drehbar zur Rotationsachse 20 der oberen Zugmittelführung 17 gelagert und gemeinsam mit dem Zugmittel 13 antreibbar sind.

5. Mähdrescher 1 nach einem der vorstehenden Ansprüche, **dadurch gekennzeichnet, dass** die Fremdkörperabscheidelemente 11 als das Zugmittel 13 durchgreifende Leisten ausgebildet sind.

6. Mähdrescher 1 nach einem der Ansprüche 1 bis 4. **dadurch gekennzeichnet, dass** die Fremdkörperabscheideelemente 11 als das Zugmittel 13 durchgreifende Finger 5 ausgebildet sind.

7. Mähdrescher 1 nach einem der vorstehenden Ansprüche, **dadurch gekennzeichnet, dass** die kreisförmige äußere Bewegungsbahn 14 der Fremdkörperabscheideelemente 11 im Durchmesser größer als der äußere Durchmesser 25 der oberen Zugmittelführung 17 ist.

8. Mähdrescher 1 nach einem der vorstehenden Ansprüche, **dadurch gekennzeichnet, dass** zumindest eine Wandung der Fremdkörperaufnahmemulde 2 schwenkbar an dem Kanal 10 festsetzbar ist.

## Claims

1. A combine harvester (1) comprising an apparatus for separating off foreign bodies, wherein the combine harvester (1) has an inclined conveyor (3) having at least one pulling means (13) which is arranged in a passage (10) and which is guided over at least a lower and an upper pulling means guide (16, 17), and at least one foreign body catch tray (2),
**characterised in that**
the upper pulling means guide (17) has a drum (26), at the outer periphery of which are arranged foreign body separating elements (11) which engage through the pulling means (13) and that the foreign body catch tray (2) is arranged in the engagement region of the foreign body separating elements (11).

2. A combine harvester 1 according to claim 1 **characterised in that** the foreign body catch tray 2 as viewed in the material flow direction is arranged in front of the upper pulling means guide 17.

3. A combine harvester 1 according to one of the preceding claims **characterised in that** the foreign body separating elements 11 are supported rotatably about the axis of rotation 20 of the upper pulling means guide 17 and are drivable jointly with the pulling means 13.

4. A combine harvester 1 according to one of the preceding claims **characterised in that** the foreign body separating elements 11 are supported eccentrically and rotatably relative to the axis of rotation 20 of the upper pulling means guide 17 and are drivable jointly with the pulling means 13.

5. A combine harvester 1 according to one of the preceding claims **characterised in that** the foreign body separating elements 11 are in the form of bars engaging through the pulling means 13.

6. A combine harvester 1 according to one of claims 1 to 4 **characterised in that** the foreign body separating elements 11 are in the form of fingers 5 engaging through the pulling means 13.

7. A combine harvester 1 according to one of the preceding claims **characterised in that** the circular outer path of movement 14 of the foreign body separating elements 11 is of larger diameter than the outside diameter 25 of the upper pulling means guide 17.

8. A combine harvester 1 according to one of the preceding claims **characterised in that** at least one wall of the foreign body catch tray 2 can be fixed pivotably to the passage 10.

## Revendications

1. Moissonneuse-batteuse (1) comprenant un dispositif pour séparer des corps étrangers, la moissonneuse-batteuse (1) comportant un convoyeur incliné (3) avec au moins un moyen de traction (13) qui est disposé dans un canal (10) et qui est dévié par l'intermédiaire d'au moins des guides inférieur et supérieur de moyen de traction (16, 17), et comprenant au moins une cuvette de récupération de corps étrangers (2), **caractérisée en ce que** le guide supérieur de moyen de traction (17) comporte un tambour (26), sur la périphérie extérieure duquel sont disposés des éléments séparateurs de corps étrangers (11) qui traversent le moyen de traction (13), et **en ce que** la cuvette de récupération de corps étrangers (2) est disposée dans la zone d'action des éléments séparateurs de corps étrangers (11).

2. Moissonneuse-batteuse 1 selon la revendication (1), **caractérisée en ce que**, par rapport au sens d'écoulement du produit, la cuvette de récupération de corps étrangers (2) est disposée avant le guide supérieur de moyen de traction (17).

3. Moissonneuse-batteuse 1 selon une des revendications précédentes, **caractérisée en ce que** les éléments séparateurs de corps étrangers (11) sont montés à rotation autour de l'axe de rotation (20) du guide supérieur de moyen de traction (17) et sont entraînés conjointement avec le moyen de traction (13).

4. Moissonneuse-batteuse 1 selon une des revendications précédentes, **caractérisée en ce que** les éléments séparateurs de corps étrangers (11) sont montés de manière excentrique et à rotation par rapport à l'axe de rotation (20) du guide supérieur de moyen de traction (17) et sont entraînés conjointement avec le moyen de traction (13).

5. Moissonneuse-batteuse 1 selon une des revendications précédentes, **caractérisée en ce que** les éléments séparateurs de corps étrangers (11) sont conformés en barrettes traversant le moyen de traction (13).

6. Moissonneuse-batteuse 1 selon une des revendications 1 à 4, **caractérisée en ce que** les éléments séparateurs de corps étrangers (11) sont conformés en doigts 5 traversant le moyen de traction (13).

7. Moissonneuse-batteuse 1 selon une des revendications précédentes, **caractérisée en ce que** la trajectoire extérieure circulaire (14) des éléments séparateurs de corps étrangers (11) est supérieure en diamètre au diamètre extérieur (25) du guide supérieur de moyen de traction (17).

8. Moissonneuse-batteuse 1 selon une des revendications précédentes, **caractérisée en ce qu'**au moins une paroi de la cuvette de récupération de corps étrangers (2) peut être fixée au canal (10) de manière pivotante.
